Europäisches Patentamt

European Patent Office

Office européen des brevets

(11) Publication number: **0 426 356 A2**

# EUROPEAN PATENT APPLICATION

(21) Application number: 90311577.2

(51) Int. Cl.⁵: **H04Q 3/00**

(22) Date of filing: 23.10.90

(30) Priority: 31.10.89 US 429663

(43) Date of publication of application:
08.05.91 Bulletin 91/19

(84) Designated Contracting States:
DE ES FR GB IT

(71) Applicant: AMERICAN TELEPHONE AND
TELEGRAPH COMPANY
550 Madison Avenue
New York, NY 10022(US)

(72) Inventor: **Livanos, Konstantin**
**207 Longleaf Drive**
**Naperville, Illinois 60540(US)**

(74) Representative: **Watts, Christopher Malcolm**
**Kelway et al**
**AT&T (UK) LTD. AT&T Intellectual Property**
**Division 5 Mornington Road**
**Woodford Green Essex IG8 OTU(GB)**

(54) Telecommunications network route selection.

(57) Busy/idle status information used for the selection of circuits for carrying interexchange telephone traffic between two exchanges, is recorded in an exchange with respect to routes, circuit groups within routes and circuits within the circuit groups. A route is defined as comprising all circuits between an exchange and a single adjacent exchange and selection of a circuit for the handling of a call is done by first selecting a direct or alternate route with reference to a route busy/idle map, selecting a circuit within a selected route with reference to a circuit busy/idle map, and finally selecting a circuit within a circuit group on the basis of circuit busy/idle information. The route and circuit group status maps are self-auditing in that a route is marked busy in the route busy/idle status map if it is determined that there is not at least one circuit group which has available circuits. Similarly, a circuit group is marked busy in the circuit group status map for a route, if it is determined that there are no idle circuits in a selected circuit group. The circuit busy/idle map is maintained by updating the map each time a circuit is seized or released, by call processing programs. A source destination restriction map is used in conjunction with the route status map to avoid the selection of routes which have been restricted with respect to a particular source. A second connection status map is used in the selection of alternate routes to avoid selecting an alternate route to an intermediate exchange which lacks available facilities to the original destination exchange.

FIG. 4

# TELECOMMUNICATIONS NETWORK ROUTE SELECTION

## Technical Field

This invention relates to telecommunications and more particularly to the selection of interexchange connections for the completion of telephone calls.

## Background of the Invention

A telephone call is originated by transmitting digits, identifying the destination, to a telephone exchange. If the destination is not part of the local exchange, the call must be routed to another destination exchange, sometimes via a network of exchanges, also called nodes. Various paths may be possible between an originating node and a terminating node. An exchange generally contains data defining first choice and alternate routes for reaching different destinations defined by area code and office code digits. A routing pattern is a collection of outgoing connections from an exchange which may be used in completing a call via one of the possible paths between the originating node and a destination. Connections ·between exchanges may consist of several circuit groups each of which has a plurality of circuits also referred to as trunks. In the prior art, routing patterns are defined in terms of all the existing circuit groups between an originating node and various adjacent nodes for all of the possible paths to a destination. These may include direct connections to the destination, the preferred route, and alternate routes. To find an idle circuit, all of the circuit groups of the possible direct and alternate routes may have to be examined until an idle circuit is found and a connection can be made. A problem with the prior art is that there may be a large number of possible routes, each having a plurality of circuit groups between origination and termination points, particularly in the high traffic routes such as between major cities or between international gateway switches. Selection of an idle circuit in the prior art system is real-time intensive and is particularly time consuming during busy hours when there are a limited number of idle circuits and all possible circuit groups may have to be examined only to find that there are no available circuits. Such extensive searching further limits, the call handling capability of the exchange during busy hours.

Since routing patterns in the prior art are defined in terms of all circuit groups in each assigned path, the addition or deletion of a circuit group between two nodes requires modification of all of the data defining the direct and alternate routes which include the changed circuit group. This process is time consuming, labor intensive and error prone. One prior art arrangement, for example, requires the updating of linked lists and typically requires twice as many updates as there are direct and alternate routes in which the changed circuit group is used.

## Summary of the Invention

In accordance with my invention, these and other problems of the prior art are overcome and an advance is made by defining a route as containing all circuits between two adjacent nodes and a routing pattern is defined in terms of routes to or towards a destination point. Advantageously, in accordance with this invention, the addition or deletion of a circuit group requires only a modification of the route definition in which the affected circuit group is included. Routing chains which include the modified route are defined in terms of the route and need not be changed when a circuit group is added or deleted. This avoids the labor intensive modification of all affected routing patterns when circuit groups are added or deleted in a route between nodes, as is found in the prior art.

In accordance with one aspect of this invention, a route status bit map defines the availability of routes. In selecting a route from a route pattern, a specific route is not chosen unless it is shown to be available in the route status bit map. The route status bit map will show availability only if there is at least one circuit group in the route that is available. Advantageously, this advanced knowledge avoids the necessity of allocating resources for searching for idle circuits in fully occupied routes.

In accordance with another aspect of the invention, a circuit group bit map defines availability of circuit groups. This map is consulted after it has been determined that a route is available and a circuit group is searched for an idle circuit only if it is indicated as available in this map, thereby further reducing system real time needed for circuit selection.

In one embodiment of the invention, the route status bit map and the circuit group bit map are updated on a self-auditing basis. A circuit group will be defined as unavailable after a search if no available circuit is found in that group and, similarly, the route status bit map will be updated to show unavailability if a search indicates that no circuit is available in any circuit group in the route. Conversely, when a call is released the route status bit map and the circuit group bit map are updated to show availability, independent of the prior state of the availability bit for the circuit group or the route.

In accordance with one aspect of this invention, an additional memory map is provided referred to as a second link status map. The second link status map indicates the availability of the second link in a two link connection to a destination. Advantageously, this advance knowledge of the status of the second link helps to avoid selecting and setting up a path from a first node to a second node when no path is available between the second node and a subsequent node. In a particular embodiment of the invention, the second link status map in a node is updated on the basis of information supplied by adjacent nodes. Each node sends messages to other connected nodes when a link to an adjacent node is no longer available for via traffic, and each of the other nodes updates its second link status map accordingly.

In accordance with one aspect this invention, alternate routes between nodes of the network are selected with reference to a network connection map. The map shows an entry for each allowable alternate route to a destination node, and is based on route chain information defined for the node in a data base relation. Advantageously, system real time is conserved by referencing a network map in memory rather than the data base relation in determining the identity of an allowable alternate route. If a selected alternate route is not available, another alternate route may be found by further reference to the network connection map. Further in accordance with the invention, route selection may be done in a sequential fashion or on a random distribution basis. Advantageously, if the routes are selected sequentially, the equivalent of a hierarchical routing structure is provided. On the other hand, if the routes are selected randomly or in any other non-sequential fashion, the equivalent of dynamic non-hierarchical routing is provided.

## Brief Description of the Drawing

The invention may be better understood from the following detailed description when read in conjunction with the drawing, in which:

FIG. 1 is a block diagram representation of a telecommunications network comprising a plurality of interconnected nodes;

FIG. 2 is a block diagram representation of a telecommunications exchange as may be incorporated in the nodes of FIG. 1;

FIGS. 3 through 5 comprise flow chart representations of functions executed in the software of a stored program controller of a type shown in FIG. 2.

## Detailed Description

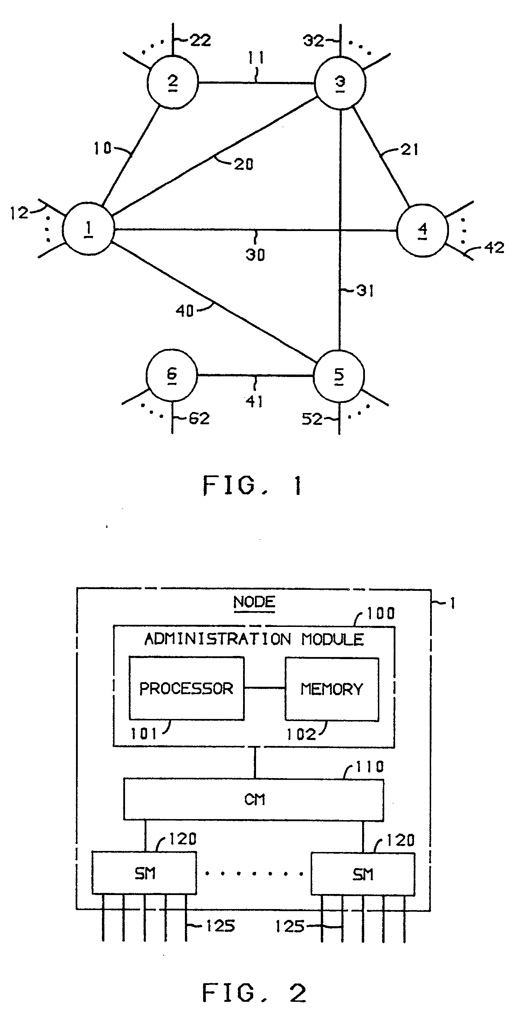

FIG. 1 is a representation of a telecommunications network, known in the prior art, consisting of a group of interconnected telecommunication exchanges referred to herein as nodes. Each node comprises a switching system for interconnecting telecommunication links terminating on the node. The principals of this invention are illustrated with respect to FIG. 1 by describing primarily the activities at an arbitrary selected node such as node 1. Node 1 is connected to node 2 via an interconnecting link 10, to node 3 via link 20, to node 4 via link 30, and to node 5 via link 40. Nodes 2 and 3 are interconnected by means of link 11, nodes 3 and 4 are interconnected via link 21, nodes 3 and 5 are interconnected via link 31 and nodes 5 and 6 are interconnected via link 41. Nodes 1 through 6 each may have other communication links, 12 through 62, respectively, connected thereto. Such additional communication links may be connected to other telecommunication exchanges, private networks or customer premises equipment. The various nodes of FIG. 1 may represent major switching exchanges in different cities which serve as a conduit to handle traffic between other nodes as well as local traffic. Alternatively, some or all of these nodes may represent toll or internationally gateway offices used primarily only for handling long distance traffic. This illustrative embodiment of the invention pertains to handling of interexchange traffic, which may originate locally or from other distant exchanges as alternate route traffic. In the illustrative arrangement of FIG. 1, node 1 has direct routes to each of the nodes 2 through 5 as well as alternate routes via other nodes. For example, traffic between node 1 and node 3 may be routed over direct route 20 or via node 2 by means of routes 10 and 11, or via node 4 via routes 30 and 21. Similar direct and alternate paths exist between node 1 and nodes 2, 4 and 5. No direct route is shown between node 1 and node 6, but node 6 can be reached via nodes using links 40 and 41. Any direct route between two nodes which serves as an alternate for another route, typically carries direct route outgoing traffic from various direct route sources, alternate route outgoing traffic from various other exchanges and in sourcing traffic.

FIG. 2 is a block diagram representation of the switching arrangement of a representative one of the nodes of FIG. 1, for example node 1. Each of the nodes of FIG. 1 include a switching arrangement which may be of an architecture similar to or different from the one shown in FIG. 2. These are well-known switching arrangements commonly used in the industry. One known arrangement is the AT&T 5ESS® switch described in the AT&T Technical Journal, July-August 1985, Vol. 64, No. 6, Part 2. The system of FIG. 2 shows a plurality of switching modules 120 each of which may be connected to a plurality of connection circuits 125. These may be well-known connecting circuits to other exchanges or private networks, or the like, commonly referred to as trunks, or may be subscriber lines. The switch module 120 will include a switching network and a control processor which are known from the prior art and not shown in the drawing. The switch module 120 typically transmits information received on circuits 125 to a communication module 110 via control links 121 and responds to commands from the module 110 to operate the switching network to establish paths between its circuits 125 or between such circuits and the communication module 110. Module 110 typically includes a switching network for establishing communication paths among switch modules 120, and between the switch modules 120 and the administrative module 100. The administrative module 100 includes a stored program controlled processor 101. The processor may, for example be the AT&T 3B20D processor described in the Bell System Technical Journal, January 1983, Vol. 62, No. 1, Part 2. The processor 101 communicates with communication module 110 via link 111. Typically, the processor 101 receives call processing related information from the switch modules 120 via the communications module 110, and programs in the processor 101 generate appropriate messages for transmission to the communications module 110 and switching modules 120 to establish the desired paths within the node. The processor 101 has an associated memory 102 for storing control programs, as well as, a number of maps, tables and database relations which are used in executing call processing programs.

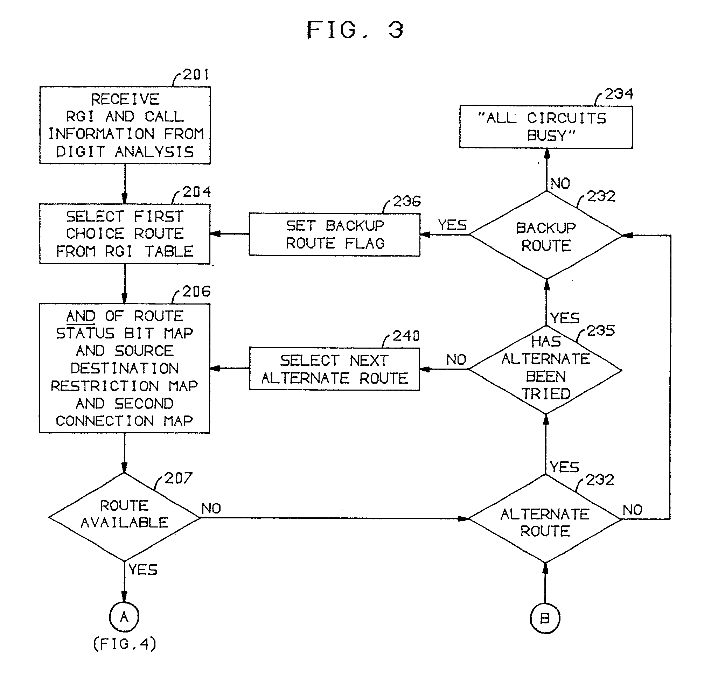

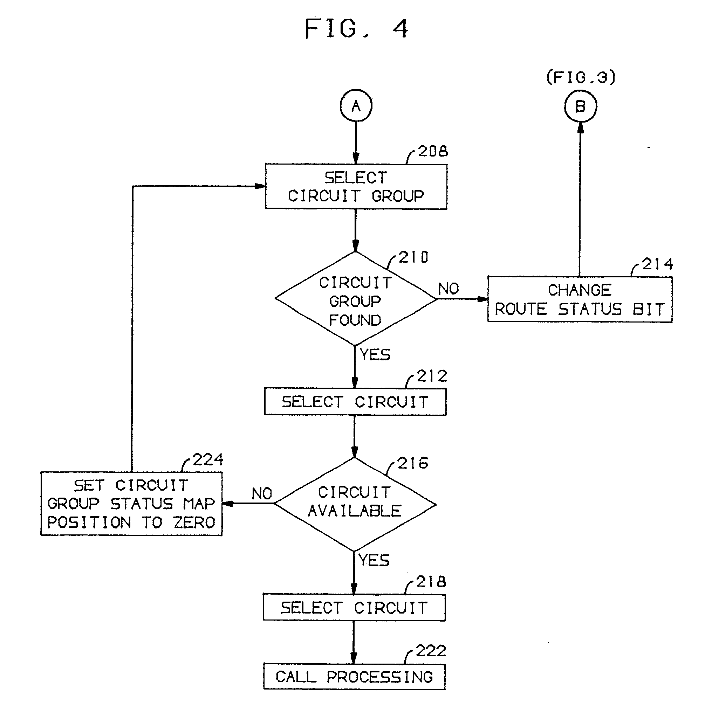

FIG. 3 is a flow chart representation of functions performed by route selection software executed by processor 101 in one of the nodes, for example node 1 of the illustrative arrangement of FIG. 1. Similar actions may take place in the other nodes of the network. As is well known, a typical telephone call is originated by the transmission of a destination telephone number to an exchange where the number is analyzed to determine the necessary treatment for the call. In modern stored program control systems the call processing software typically includes a digit analysis program which interprets the called telephone number received from the customer and determines the routing for the call. Call processing programs are generally well known in the industry. One call processing program, including a digit analysis program is described in the Bell System Technical Journal, Vol. XLIII, September 1964, No. 5, Part 2. Digit analysis includes determining whether a call is an intraexchange or an interexchange call. If it is an interexchange call, the digital analysis program defines a route group index (RGI) which is interpreted by means of information provided by the telephone administration administering the exchange and defining first choice and alternate routes for the call. The route group index is typically derived, by the digit analysis program with reference predefined information such as class of service and other relevant data.

The flow chart of FIG. 3 starts in block 201 with the receipt of a route group index and call information from the digit analysis program. Based on the route group index, the route selection software, being executed on the processor 101, reads a database relation defining an RGI table, for example from memory 102 and selects a route as indicated in block 204. The RGI table includes for each route group index a code identifying a first preference route and alternate routes. By way of example, Table 1 represents an illustrative RGI table showing first preference and alternate routes. It shows a route group index 100 and a code for the first preference route as route 20 and codes for first, second and third alternate routes as 10, 30 and 40, respectively. Other preferred and alternate routes, corresponding to routes of FIG. 1 are shown in Table 1 by way of illustration. In this illustrative embodiment, information stored in the RGI table is used to construct a network connectivity map. This table is constructed, for example, at program initialization and is updated whenever the RGI table is changed. A network connectivity map corresponding to the RGI table of Table 1, stored in memory 102, is shown in Table 8. The network connectivity map is easier to access than a database relation and is used to find alternate routes. Columns in Table 8 show the alternate routes for each direct route. By way of example, a call from the node 1 to node 4 will use route 30 as a direct route and route 20 as an alternate route. Block 204, FIG. 3 indicates the step of obtaining the first choice route from the RGI table.

The node, in its memory 102 maintains a route status bit map showing busy/idle status of all of its direct routes to other nodes. An example of the bit status map is shown in Table 2, wherein an idle condition of direct routes to nodes adjacent to node 1 is identified by a '1'. Another table maintained in

4

memory 102 of each node is a source destination restriction map. An example of such a map is shown in Table 3. This map indicates restrictions between nodes in the system and helps to define the possible routes from a source to a destination. For example, the map of Table 3, which contains a 1 when there is no restriction, indicates that calls coming to node 1 from node 2 cannot be routed on route 10 or route 40. The route selection program depicted in FIGS. 3 and 4 receives the source and destination information as part of the call information from the digit analysis program, as shown in block 201. Even though routes may exist physically, conditions may exist which prohibit use of the routes. In this example, route 10 leads back to the source, which is not an allowed path, and it may be that node 5 (route 40) has no agreement with node 2 for handling its traffic.

Yet another table in the memory 102 is the second connection map. As depicted in FIG. 1, for example, when a call is routed from node 1 to node 3 via node 2, the link 11 is the second connection in the route. The second connection map indicates the availability of that link. An example of the second connection status map is shown in Table 4. A link may not be available even though the connection exists due to an overload condition or a fault. When the route selected by the route selection program is an alternate route, the entry of map defined by the direct route (row) and the alternate route (column) defines the state of the second connection link. For example, a call from node 1 to node 3, for which the direct route is 20, may be routed via node 2 over links 10 and 11, or via node 4 via links 30 and 21, or via node 5 over links 40 and 31. By way of example, Table 4 shows that for direct route 20, alternate route 10 has an available second link but alternate routes 30 and 40 do not. This map is updated by messages from the adjacent nodes, on a periodic basis, indicating whether restrictions exist. Utility of this map clearly depends on cooperation with other exchanges.

Block 206 of FIG. 3 indicates that the logical AND function is performed of the route status bit map (Table 2) for the route selected in block 204, with the entry of the source destination restriction map (Table 3) pertaining to the source of the call and the selected route, and with the second connection map (Table 4) entry for the pertinent direct and alternate routes. Assuming that the call destination is node 2, the route status bit map shown in Table 2 will indicate that for route 10, the direct route to node 2, there is a 1 in the route status bit map. This indicates that there is at least one available circuit in this route for handling traffic. To determine the appropriate position of the source-destination restriction map, the source of the call, included in the call information received in block 201, must be taken into consideration. In the matrix of Table 3, the source destination restriction map, a '1' is found for route 10 for traffic originating from node 1 indicating that there are no restrictions for such a call. However, if this is a call originating from node 2, it may not be routed on route 10 as indicated by a '0' in the pertinent position. The matrix of Table 4, the second connection status map indicates a '1' at all diagonal positions. When a direct route is used, e.g. route 10 for calls from node 1 to node 2, the second connection map is not needed. For the sake of convenience, however, a '1' is inserted at the diagonal and this position is examined when a direct route is used. Thus, in this particular example, performance of the AND function in block 206 will show that direct route 10 from node 1 to node 2 is available.

In decision block 207, a test is made to determine whether or not the result of the AND function is true and the path is available. The routes of FIG. 1 each consists of a number of circuit groups each comprising a number of transmission circuits. These circuit groups may correspond to different transmission media such as microwave, satellite, etc. Circuit groups may be selected on the basis of first available circuit group or in accordance with a standard distribution algorithm to assure that all circuit groups are used with approximately the same frequency. Block 208 reflects the step of selecting a circuit group. The fact that the route status bit map indicates availability of the route presumes that at least one circuit in one of the circuit groups is idle. For each circuit group, there is a circuit group status bit map, shown by way of example in Table 5. The status bit map shows a bit indicating availability for each circuit group in the route. When this map indicates availability, it is assumed that there is at least one circuit in the indicated circuit group which is available for service. In this example, circuit group 1 is available. The test for an available circuit group is shown in block 210 of FIG. 3. In the event that no circuit group is available, an advance is made from decision block 210 to block 214 to reset the route status bit map to zero, thereby indicating that there are no available circuits in the route. In this manner, the route status bit map is self-auditing and self-correcting. If the route status bit map is set to 1, indicating availability, the first time that an available circuit is not found, it will be reset to 0. Furthermore, in connection with termination, the route status bit map is set to '1' each time a call on the route is terminated and a circuit is made available.

Block 212 of FIG. 5 indicates the step of selecting a circuit in the circuit group selected in block 208. A circuit group may have a large number of circuits and in this illustrative embodiment the busy/idle bit map for each of the circuits of a group is accessed by means of a linked list. For example, a list of pointers addressable on the basis of the selected route and the circuit group will contain pointers to a corresponding

5

area of memory containing busy/idle map, which may consist of any number of memory words. An exemplary busy/idle map is shown in Table 6. Bit positions 0 through 63 of the busy/idle map correspond to correspondingly numbered circuits and the 1 or 0 in a bit position indicates the availability or nonavailability of the circuit. The busy/idle map is searched in a standard fashion. Any well known search and selection algorithms may be used for this purpose. A test is made in block 216 of FIG. 5 to determine if an idle circuit has been found. In the event that an available circuit is not found in the test in block 216, an advance is made to block 224 to set the circuit group status map position to zero. Like the route status map, the circuit group status map is also self-auditing and self-correcting in that the map is set to the busy condition when it is found that there is no circuit available in the group. Thereafter, a return is made to block 208 again to select another circuit group, and again a test is made of the circuit group status map in block 210 to determine if the selected circuit group is available.

Returning to decision block 207 of FIG. 3, a test is made to determine whether the path determined by the route selected in block 204 is available by testing the result of the AND function performed in block 206. If it is found that the selected route is not available, an advance is made to decision block 230 to determine whether there is an alternate for the previously tested route. This decision block 230 is also entered from block 214 if no available circuit group has been found in the previously selected route. To determine whether there is an alternate route, the network connectivity map (Table 8) is consulted. Since the previously selected direct route is known, the network connectivity map can be accessed at the proper position to find the identity of alternate routes. For example, for direct route 10, the alternate route is 20. A further test to be made, executed in decision block 235, is the comparison of the identity of alternate routes found in the network connectivity map with the identity of previously tried alternate routes. If one or more alternate routes are identified which have not been previously tried for this call, an advance is made to block 240 of FIG. 3 where the next alternate route is selected, and route and circuit availability is once again tested in the manner described earlier herein with respect to blocks 206 and subsequent blocks.

If it is found in executing the tests of blocks 230 and 235 that there is no alternate route or no alternate route which has not been tried, a determination is made whether backup route should be tried, as indicated in block 232. If not, an "all circuits busy" indication is provided to the call processing program, as indicated in block 234. The backup route test in block 232 allows for special treatment in case of certain high priority call types. The function of this feature is to restart the entire route selection procedure and may include resetting of certain timers in the related call processing program which might otherwise time out if an inordinate amount of time is taken in selecting a route. These actions with respect to call processing timers are taken by the call processing programs in a well known manner, in response to the setting of the backup route flag as indicated in block 236. After the setting of that flag, a return is made to block 204 and the RGI table is examined in the B-RGI column (Table 1). The entry in this column reflects a back up route group index referring to another entry in the table, e.g., 500, which reflects a different first choice and alternate route for high priority calls. Therefore, the sequence indicated in block 204 and subsequent blocks, is repeated with respect to the new first choice route and alternate routes as discussed in the previous paragraphs. The flag is also reset by the call processing programs. Attempts to use the back up route may be limited to a single try or several tries, by the means of a counter which toggled each time the back up route is tried.

TABLE 1

| ROUTE GROUP INDEX TABLE | | | | | |
|---|---|---|---|---|---|
| RGI | Route | | | | |
|  | F | ALT1 | ALT2 | ALT3 | B-RGI |
| 100 | 20 | 10 | 30 | 40 | 500 |
| 200 | 30 | 20 | - | - | |
| 300 | 40 | 20 | - | - | |
| 400 | 10 | 20 | - | - | |
| 500 | 30 | 40 | | | |

## TABLE 2

| ROUTE STATUS MAP | | | |
|---|---|---|---|
| 10 | 20 | 30 | 40 |
| 1 | 1 | 0 | 1 |

## TABLE 3

| SOURCE DESTINATION RESTRICTION MAP | | | | |
|---|---|---|---|---|
| Source | Destination | | | |
| | 10 | 20 | 30 | 40 |
| 1 | 1 | 1 | 1 | 1 |
| 2 | 0 | 1 | 1 | 0 |
| 3 | 1 | 0 | 0 | 1 |
| 4 | 1 | 0 | 0 | 0 |
| 5 | 0 | 1 | 0 | 0 |

## TABLE 4

| SECOND CONNECTION STATUS MAP | | | | |
|---|---|---|---|---|
| Direct Route | Alternate Route | | | |
| | 10 | 20 | 30 | 40 |
| 10 | 1 | 1 | 1 | 1 |
| 20 | 1 | 1 | 0 | 0 |
| 30 | 1 | 0 | 1 | 1 |
| 40 | 1 | 0 | 1 | 1 |

## TABLE 5

| CIRCUIT GROUP STATUS MAP | | | | | |
|---|---|---|---|---|---|
| GROUP # | | | | | |
| 0 | 1 | 2 | 3 | 4 | ------ |
| 0 | 1 | 1 | 0 | 1 | ------ |

TABLE 6

| CIRCUIT BUSY IDLE MAP | | | | | | | | | |
|---|---|---|---|---|---|---|---|---|---|
| 31 | 30 | 29 | . | . | . | . | . | . | 0 |
| 1 | 0 | 0 | . | . | . | . | . | . | 0 |
| 63 | . | . | . | . | . | . | . | . | 32 |
| 1 | . | . | . | . | . | . | . | . | 1 |

TABLE 7

| NETWORK CONNECTIVITY MAP | | | | |
|---|---|---|---|---|
| Route | Alternate Route | | | |
|  | 10 | 20 | 30 | 40 |
| 10 | - | 1 | 0 | 0 |
| 20 | 1 | - | 1 | 1 |
| 30 | 0 | 1 | - | 0 |
| 40 | 0 | 1 | 0 | 0 |

## Claims

**1.** In a telecommunications system having a first exchange and a plurality of other exchanges, each connected to said first exchange via a plurality of groups of interexchange transmission links, links of each group having characteristics unique to a group, a method of selecting in said first exchange one of said links for the completion of telecommunication connections between said first exchange and a second exchange, comprising the steps of:

on a per call basis, selecting a first route from a route table defining a plurality of possible routes for calls to said second exchange, each route in said route table representing all interconnecting links of all groups of links between said first exchange and one of said other exchanges;

determining availability of said first route on the basis of prerecorded route availability data stored on a per-route basis in said first exchange; and

selecting a next route from said route table if said route availability data for said first selected route indicates that said first selected route is not available.

**2.** The method in accordance with claim 1, wherein the step of selecting a next route comprises the steps of examining a second link status table defining busy/idle status information stored in said first exchange for an additional link connected between said second exchange and a third exchange connected to said next route and required for the completion of a call from said first to said second exchange via said third exchange, and selecting another next route from said route table if said second link status table indicates unavailability of said additional link.

**3.** The method in accordance with claim 2, wherein said second link connection map is updated in said first exchange to reflect availability and non-availability of said second connection links in response to messages from said third exchange to the first exchange.

**4.** The method in accordance with claim 1, wherein said step of a determining availability includes the step of examining a source destination restriction map stored in said first exchange, wherein said source

8

destination restriction map defines those routes which are available for use for calls from each of a plurality of different sources of calls.

5. The method in accordance with claim 4, and wherein said step of determining availability includes the step of selectively performing a logical AND of said route availability data and said source destination restriction map.

6. The method in accordance with claim 2, wherein said step of determining availability includes the step of examining a source destination restriction map stored in said first exchange, wherein said source destination restriction map defines those routes which are available for use for calls from each of a plurality of different sources of calls, and the step of performing the logical AND function of said route availability data, said second link status table and said source destination restriction map.

7. In a first telecommunications exchange, a method of selecting a link for the completion of a telephone call to a second exchange, comprising the steps of:

providing in said first exchange a route table defining a plurality of possible routes for calls to said second exchange, including routes for completing calls to said second exchange via a third exchange, each said route representing a plurality of groups of interconnecting circuits between said first exchange and another exchange;

selecting a first route for completion of said call from said route table;

determining availability of said first route on the basis of prerecorded route available data stored on a per-route basis in said first exchange; and

selecting a next route from said route table if said route availability data for said first selected route indicates that said first selected route is not available.

8. The method in accordance with claim 7 wherein a route comprises a plurality of groups of interconnecting circuits and said method further comprises the steps of selecting a group of circuits in said first selected route if said route availability data indicates that said first selected route is available and determining availability of said group of circuits in said first selected route on the basis of prerecorded group availability data stored on a per-group basis in said first exchange; and

selecting a next group in said first selected route if said group availability data for said first selected group indicates that said first selected group is not available.

9. The method in accordance with claim 8 and further comprising the step of altering said route availability data if there are no available circuit groups in said route.

10. The method in accordance with claim 8 wherein said step of determining availability further comprises the step of selecting a circuit in said first selected group and changing said group status information if no available circuit is found.

11. The method in accordance with claim 8 wherein said route table defines a plurality of routes and wherein said step of selecting a next route includes the step of selecting another first choice route after all routes in said route table have been selected at least once and repeating the steps of determining availability and selecting a next route from said route table.

FIG. 1

FIG. 2

# FIG. 3

```
┌─────────────────────┐  ╭201
│      RECEIVE        │
│   RGI AND CALL      │
│ INFORMATION FROM    │
│   DIGIT ANALYSIS    │
└─────────────────────┘
          │
          ▼
┌─────────────────────┐  ╭204          ┌─────────────────┐  ╭236
│   SELECT FIRST      │ ◄──── YES ──── │  SET BACKUP     │
│   CHOICE ROUTE      │                │  ROUTE FLAG     │
│   FROM RGI TABLE    │                └─────────────────┘
└─────────────────────┘
```

RECEIVE RGI AND CALL INFORMATION FROM DIGIT ANALYSIS — 201

SELECT FIRST CHOICE ROUTE FROM RGI TABLE — 204

AND OF ROUTE STATUS BIT MAP AND SOURCE DESTINATION RESTRICTION MAP AND SECOND CONNECTION MAP — 206

ROUTE AVAILABLE — 207

SET BACKUP ROUTE FLAG — 236

SELECT NEXT ALTERNATE ROUTE — 240

"ALL CIRCUITS BUSY" — 234

BACKUP ROUTE — 232

HAS ALTERNATE BEEN TRIED — 235

ALTERNATE ROUTE — 232

A (FIG.4)

B

# FIG. 4